Europäisches Patentamt

European Patent Office

Office européen des brevets

(19)

(11) **EP 1 224 412 B1**

(12) **EUROPÄISCHE PATENTSCHRIFT**

(45) Veröffentlichungstag und Bekanntmachung des Hinweises auf die Patenterteilung:
**28.05.2003 Patentblatt 2003/22**

(21) Anmeldenummer: **00972854.4**

(22) Anmeldetag: **24.10.2000**

(51) Int Cl.$^7$: **F16H 61/06**, F16D 48/06

(86) Internationale Anmeldenummer:
**PCT/EP00/10455**

(87) Internationale Veröffentlichungsnummer:
**WO 01/033110 (10.05.2001 Gazette 2001/19)**

(54) **VERFAHREN UND VORRICHTUNG ZUM STEUERN UND REGELN EINER KUPPLUNG IN EINEM GESTUFTEN LASTSCHALTBAREN AUTOMATGETRIEBE**

METHOD AND DEVICE FOR CONTROLLING AND ADJUSTING A CLUTCH IN AN AUTOMOTIVE AUTOMATIC STEPPED POWER-SHIFT GEARBOX

PROCEDE ET DISPOSITIF DE COMMANDE ET DE REGULATION D'UN EMBRAYAGE DANS UNE BOITE AUTOMATIQUE A COMMUTATION ETAGEE EN CHARGE

(84) Benannte Vertragsstaaten:
**DE FR GB IT**

(30) Priorität: **30.10.1999 DE 19952350**

(43) Veröffentlichungstag der Anmeldung:
**24.07.2002 Patentblatt 2002/30**

(73) Patentinhaber: **ZF FRIEDRICHSHAFEN Aktiengesellschaft**
**88038 Friedrichshafen (DE)**

(72) Erfinder:
- **VOHMANN, Martin**
  **73730 Esslingen (DE)**
- **DREIBHOLZ, Ralf**
  **88074 Meckenbeuren (DE)**

(56) Entgegenhaltungen:
**EP-A- 0 707 998          WO-A-00/14434**
**DE-A- 3 935 438          DE-A- 4 409 122**

**Beschreibung**

Die Erfindung betrifft ein Verfahren zum Steuern und Regeln einer Kupplung in einem gestuften lastschaltbaren Automatgetriebe für ein Kraftfahrzeug, bei dem ein elektronisches Steuergerät mit zwei Regelkreisen das Verhalten der Kupplung bestimmt. Die Erfindung betrifft ferner eine Einrichtung zur Durchführung des Verfahrens zum Steuern und Regeln einer Kupplung in einem Kraftfahrzeugantrieb.

Unter einer Kupplung im Sinne der Erfindung ist eine Anfahrkupplung zu verstehen. Hierunter fallen Kupplungen, die zwischen einer Brennkraftmaschine und einem Automatgetriebe angeordnet sind, Wandlerüberbrückungskupplungen als auch im Automatgetriebe angeordnete Kupplungen und Bremsen, die sowohl zum Anfahren als auch als Schaltkupplung verwendet werden können.

Insbesondere betrifft die Erfindung nasslaufende Anfahrkupplungen, die im Automatgetriebe integriert sein können. Meistens sind solche Anfahrkupplungen jedoch als Baugruppe am Getriebeeingang angeordnet, beispielsweise auch als Anfahrelement in einem automatisierten Stufengetriebe. Speziell in stufenlosen Getrieben (Continuously Variable Transmission) wird die nasse Anfahrkupplung auch als Baugruppe am Getriebeabtrieb angeordnet.

Üblicherweise werden Kupplungen und Bremsen im Automatgetriebe oder im automatisierten Stufengetriebe elektrohydraulisch betätigt, unabhängig vom Einsatz des Schaltelements als Gangwechselkupplung, Anfahrkupplung oder Wandlerüberbrückungskupplung. Hierzu werden üblicherweise fahrzeugspezifische, getriebespezifische und fahrzustandsabhängige Größen, wie beispielsweise Achs- und Gangübersetzungen, Motordrehmoment, Motordrehzahl, Fahrpedalstellung, oder ähnliche, in einem elektronischen Getriebesteuergerät verarbeitet und entsprechende kupplungsrelevante Ausgangssignale, beispielsweise zur Drucksteuerung bzw. Druckregelung oder während eines Gangwechsels oder zur Drehzahlregelung während eines Schlupfbetriebs, an ein hydraulisches Steuergerät übermittelt und dort mittels Aktuatoren und Hydraulikventil in hydraulische Steuerdrücke für die entsprechende Kupplung umgesetzt.

Ein Verfahren zum Steuern einer Anfahrkupplung ist unter anderem aus der gattungsbildende DE 44 09 122 A1 bekannt. Die Anfahrsteuerung besteht hierbei aus zwei Phasen; in einer ersten Phase wird die Eingangsdrehzahl der Kupplung auf eine Solldrehzahl hingeführt, wobei die Solldrehzahl aus der Leistungsvorgabe des Fahrers und einer Fahraktivität festgelegt wird. In der zweiten Phase wird die Differenz der Eingangs- zur Ausgangsdrehzahl der Kupplung nach einem Sollwertverlauf auf Null reduziert.

Aus der DE 39 37 976 A1 ist ein Verfahren zur Regelung einer Kupplung bekannt, die zur Schwingungsentkopplung dient. Der Schlupf in der Kupplung wird hierbei in Abhängigkeit einer am Getriebeausgang ermittelten Drehungleichförmigkeit verändert.

Aus der EP 0 214 989 B2 wiederum ist bekannt, eine im Automatgetriebe integrierte Kupplung als Anfahrelement zu verwenden.

Die bislang unveröffentlichte DE 198 40 573 der Anmelderin beschreibt ein Verfahren zum Steuern und Regeln einer Kupplung in einem stufenlosen Automatgetriebe für ein Kraftfahrzeug, wonach die Kupplung während zwei Fahrzuständen mittels eines ersten Regelkreises gesteuert und geregelt wird; die Regelgröße entspricht hierbei dem Istwert einer Differenzdrehzahl der Kupplung. Der erste Zustand entspricht einem Anfahrvorgang und der zweite Zustand entspricht dem Fahren mit variabler Übersetzung.

Aus der ebenfalls noch unveröffentlichten DE 198 40 572 der Anmelderin ist ein Verfahren zum Steuern und Regeln einer Kupplung in einem automatisierten Stufengetriebe mit Zugkraftunterbrechung, bzw. in einem automatisierten lastschaltbaren Stufengetriebe bekannt. Dabei wird während drei Fahrzuständen mittels eines ersten Regelkreise gesteuert, bzw. geregelt; die Regelgröße entspricht dem Istwert einer Differenzdrehzahl der Kupplung. Der erste Zustand entspricht einem Anfahrvorgang, der zweite Zustand entspricht dem Fahren mit konstanter Übersetzung und der dritte Zustand liegt dann vor, wenn eine Lastschaltung, bzw. eine Verstellung der Übersetzung von einer ersten in eine zweite Übersetzungsstufe des Automatgetriebes initiiert wird.

Der vorliegenden Erfindung liegt die Aufgabe zugrunde, ausgehend von dem vorbeschriebenen Stand der Technik, ein Verfahren zum Steuern und Regeln einer Kupplung in einem gestuften lastschaltbaren Automatgetriebe für ein Kraftfahrzeug sowie eine Vorrichtung zur Durchführung des Verfahrens zum Steuern und Regeln der Kupplung anzugeben und diese im Hinblick auf die Mehrfachnutzung einer einzigen Kupplung, insbesondere bezüglich verbesserter Regelqualität und Regeldynamik, in Verbindung mit einem gestuften lastschaltbaren Automatgetriebe weiterzuentwickeln.

Diese Aufgabe wird erfindungsgemäß durch die Gegenstände der unabhängigen Ansprüche gelöst. Weitere vorteilhafte Ausgestaltungen der Erfindung sind in den Unteransprüchen beschrieben.

Die Erfindung besteht vorteilhafterweise darin, daß zur Steuerung und Regelung der Kupplung während eines ersten Fahrzustands der erste Regelkreis verwendet wird; die Regelgröße entspricht dem Istwert der Motordrehzahl n_MOT_IST, welche der Eingangsdrehzahl der Kupplung entspricht. Während des zweiten Fahrzustands wird ein zweiter Regelkreis verwendet, dessen Regelgröße dem Istwert der Differenzdrehzahl der Kupplung dnK_IST äquivalent ist, und schließlich wird während des dritten Fahrzustands die Kupplung mit einem gesteuerten, von verschiedenen Einflußgrößen abhängigen Druckwert beaufschlagt. Die drei Fahrzustände entsprechen hierbei einem Anfahrvorgang unterhalb einer Fahrzeuggrenzgeschwindigkeit im Zugbetrieb als erstem Zustand, dem Fahren jenseits des Anfahrvorgangs oberhalb einer Fahrzeuggrenzgeschwindigkeit mit einem positiven oder negativen Moment im Zug- bzw. Schubbetrieb als zweitem Zustand sowie dem Fahren unterhalb einer Fahrzeuggrenzgeschwindigkeit mit negativem Moment am Abtrieb im Schubbetrieb während des dritten Zustands, wobei sich der Anfahrvorgang von den anderen Fahrzuständen dadurch unterscheidet, daß die Fahrzeuggeschwindigkeit kleiner einem Grenzwert ist und der Fahrzeugmotor unterhalb dieser Grenzgeschwindigkeit abgewürgt werden kann.

Durch das erfindungsgemäße Verfahren wird vorteilhafterweise eine bessere Reaktion der Getriebesteuerung auf Lastwechsel erreicht, insbesondere beim Gaswegnehmen in dem dritten Zustand, da hier der Druckwert der Kupplung nur gesteuert und nicht geregelt ist.

Ferner wird die Kupplungsdifferenzdrehzahl nicht bis zu einem Wert Null nachgeführt, so daß hierdurch vorteilhafterweise eine Schwingungsentkopplung zwischen dem Motor und dem Getriebe erreicht wird.

In einer vorteilhaften Weiterbildung der Erfindung wird vorgeschlagen, daß die Lastschaltung maßgeblich von einem dritten Regelkreis bestimmt wird und daß der erste und dritte bzw. der zweite und dritte Regelkreis über ein Entkopplungsnetzwerk miteinander verbunden sind, wobei das Entkopplungsnetzwerk jeweils einen ersten und einen zweiten Signalweg aufweist. Bei einer Lastschaltung im Sinne einer Überschneidungsschaltung bestimmt somit ein eigener Regelkreis, nämlich der dritte Regelkreis, das Verhalten der zu- und abschaltenden Kupplungen. Da es während der Lastschaltung aufgrund der zu verzögernden bzw. zu beschleunigenden rotatorischen Massen zu einer Beeinflussung der Kupplung kommt, wird für diesen Fall vorgeschlagen, den ersten und den dritten bzw. den zweiten und den dritten Regelkreis über ein Entkopplungsnetzwerk miteinander zu verbinden, so daß vorteilhafterweise die beiden im Einsatz befindlichen Regler sich in ihrer Wirkung nicht gegenseitig beeinflussen.

Bei einer Lastschaltung von einer ersten in eine zweite Übersetzungsstufe des Automatgetriebes während des ersten Fahrzustandes wirkt der erste Regelkreis mittels des Entkopplungsnetzwerkes via dem ersten Signalweg auf den dritten Regelkreis ein und der dritte Regelkreis wirkt mittels des Entkopplungsnetzwerkes via zweitem Signalweg auf den ersten Regelkreis zurück.

Bei einer Lastschaltung von einer ersten in eine zweite Übersetzungsstufe des Automatgetriebes während des zweiten Fahrzustandes wirkt der zweite Regelkreis mittels des Entkopplungsnetzwerkes via erstem Signalweg auf den dritten Regelkreis ein und der dritte Regelkreis wirkt mittels des Entkopplungsnetzwerkes via zweitem Signalweg auf den zweiten Regelkreis zurück.

In einer Weiterbildung der Erfindung wird vorgeschlagen, das Druckniveau pAK der Kupplung im ersten und im zweiten Zustand aus der Summe aus einem Offsetwert pAK_OFF und einem Summenwert pSUM zu berechnen. Der Summenwert pSUM wird maßgeblich aus der Bilanz von dem gesteuerten Moment MK(ST) der Kupplung, dem geregelten Summenmoment MK(RE)' der Kupplung und entkoppeltem Lastschaltmoment MLS_ENT bestimmt.

Das gesteuerte Moment MK(ST) wird maßgeblich aus dem dynamischen Moment der Kupplung MDYN_K und dem Motormoment MMOT bestimmt.

Das geregelte Summenmoment MK(RE)' der Kupplung wird aus dem dynamischen Motormoment MDYN_MOT und einem geregelten Moment MK(RE) bestimmt.

Das geregelte Moment MK(RE) im ersten Fahrzustand wird maßgeblich aus dem Soll-/Ist-Vergleich einer der Motordrehzahl n_MOT äquivalenten Größe und einer Leistungsvorgabe DKI eines Fahrers mittels eines Reglers bestimmt.

Die gangabhängige Solldrehzahl dn_SW(i) für einen Anfahrgang des Automatgetriebes wird im zweiten Fahrzustand über ein Kennfeld KF1(i), i = 1, 2, bestimmt. Dieses Kennfeld stellt dabei eine Zuordnung von Leistungsvorgabe des Fahrers DKI und Abtriebsdrehzahl nAB der Kupplung dar.

Während einer Lastschaltung des gestuften Automatgetriebes erfolgt vorteilhafterweise eine Umschaltung von einem ersten Kennfeld KF1 (i1) auf ein zweites Kennfeld KF1(i2).

Das geregelte Moment im zweiten Fahrzustand MK(RE) wird maßgeblich aus dem Soll-/Ist-Vergleich der Drehzahldifferenz dnK_SW, dnK_IST der Kupplung und einer Leistungsvorgabe DKI eines Fahrers mittels eines Reglers bestimmt.

Vorteilhafterweise beinhaltet der Regler einen begrenzten Integrator, wobei dem Integrator als Eingangsgrößen die Regelabweichung aus dem Soll-/Ist-Vergleich der Drehzahldifferenz dnK_SW, dnK_IST der Kupplung, die Verstellgeschwindigkeit der Leistungsvorgabe DKI und dem Verhältnis Ist- zu Sollwert der Differenzdrehzahl dnK_IST/dnK_SW der Kupplung zugeführt wird.

Vorteilhafterweise ergibt sich der Sollwert der Differenzdrehzahl dnK_SW der Kupplung aus der Addition des Sollwert-Offset dnLS_SW und einer gangabhängigen Differenzdrehzahl dn_SW(i) der Kupplung.

Vorteilhafterweise wird bei einem Übergang von dem ersten oder dritten Fahrzustand in den zweiten Fahrzustand der Sollwert der Differenzdrehzahl dnk_SW über ein Filter, insbesondere ein dynamisches Verzögerungsglied geleitet, wobei als Anfangswert des Verzögerungsgliedes der aktuelle Istwert der Differenzdrehzahl dnK_IST gesetzt wird.

In einer Weiterbildung der Erfindung wird vorgeschlagen, daß im zweiten Zustand der Sollwert-Offset der Differenzdrehzahl dnLS_SW der Kupplung während der Lastschaltung von einer ersten i1 in eine zweite Übersetzungsstufe i2 des Automatgetriebes in der Lastübernahme- oder Gradienteinstellphase erhöht und mit Beendigung der Schließphase wieder reduziert wird.

Auch hier erfolgt die Umschaltung von einem gangabhängigen Kennfeld KF(i1) auf ein Kennfeld KF(i2) während der Lastschaltung.

Die Kennfelder sind hierbei derart gestaltet, daß sich bei einer Fahrzeuggeschwindigkeit v kleiner einem Grenzwert GW eine erhöhte Differenzdrehzahl dn_SW(i) der Kupplung ergibt. Hierdurch wird ein aktiver Abwürgeschutz für Nichtanfahrgänge, also z. B. dem vierten oder fünften Gang des Automatgetriebes, erzielt.

Vorteilhafterweise wird auch im zweiten Fahrzustand bei einer Fahrzeuggeschwindigkeit v kleiner einem Grenzwert GW eine erhöhte Differenzdrehzahl dn_SW(i) der Kupplung als Abwürgeschutz berechnet. Dabei ist die erhöhte Differenzdrehzahl dn_SW(i) größer eingestellt als die Differenz aus der minimalsten Drehzahl der Brennkraftmaschine n_MOT_MIN und der Abtriebsdrehzahl der Kupplung nAB.

Im dritten Fahrzustand ergibt sich das Druckniveau pAK der Kupplung aus einem Druckwert, welcher von einer oder mehreren der folgenden Größen abhängig ist: Drosselklappenstellung, Bremsbetätigung, Bremsdruck, Motormoment, Lastschaltung oder ähnliches und wobei der Druckwert eine gesteuerte Größe ist.

Vorteilhafterweise wird auch eine Vorrichtung zur Durchführung eines Verfahrens zum Steuern und Regeln einer Kupplung in einem gestuften lastschaltbaren Automatgetriebe für ein Kraftfahrzeug angegeben. Hierzu ist ein elektronisches Steuergerät mit einem ersten und einem zweiten Regelkreis vorgesehen, wobei die Regelgröße des ersten Regelkreises dem Istwert der Motordrehzahl und die Regelgröße des zweiten Regelkreises dem Istwert einer Differenzdrehzahl der Kupplung äquivalent ist.

Weiterhin ist ein dritter Regelkreis vorgesehen, der über ein Entkopplungsnetzwerk mit dem ersten und dem zweiten Regelkreis verbunden ist und wobei der dritte Regelkreis maßgeblich die Lastschaltung bestimmt.

Ferner wird das Entkopplungsnetzwerk je einen ersten und einen zweiten Signalweg zwischen dem ersten und dritten und zwischen dem zweiten und dritten Regelkreis auf.

Diese Erfindung ist nachstehend anhand des in den Zeichnungen dargestellten Ausführungsbeispiels für eine Lastschaltung erläutert.
Es zeigen:

Fig. 1      eine Übersicht des ersten und zweiten Regelkreises;

Fig. 2      Funktionsblock Sollwert-Vorgabe;

Fig. 3      Funktionsblock Regler;

Fig. 4      zweites Kennfeld für Nicht-Anfahrgänge;

Fig. 5      Sollwert Differenzdrehzahl Lastschaltung über der Zeit;

Fig. 6      Sollwert Differenzdrehzahl gangabhängig über der Zeit und

Fig. 7      Sollwert Differenzdrehzahl Kupplung über der Zeit.

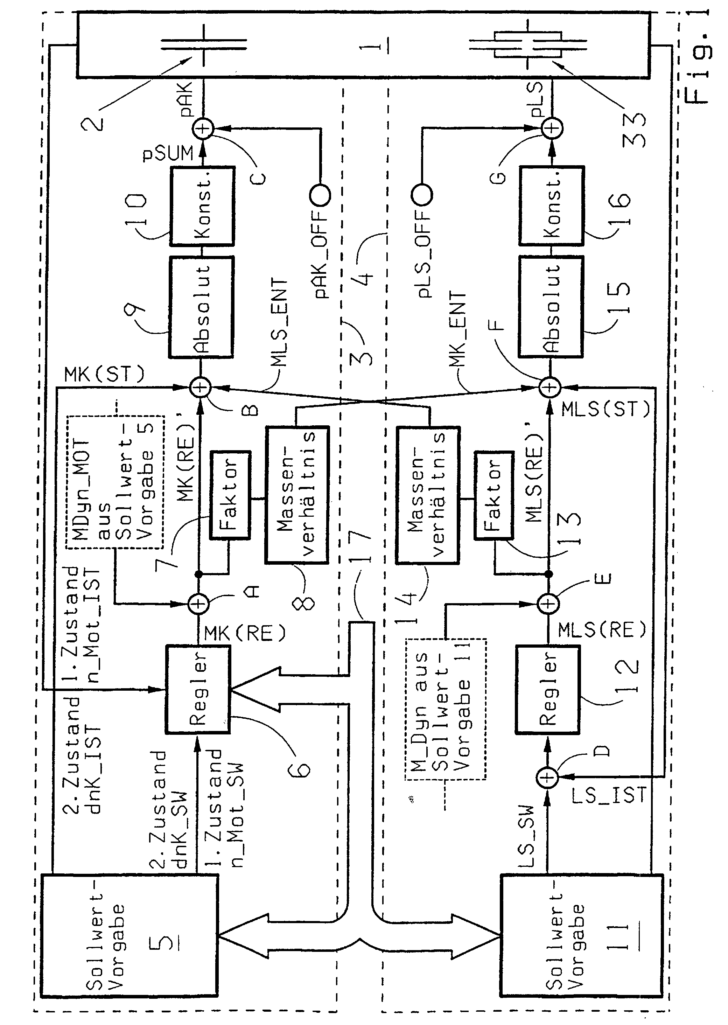

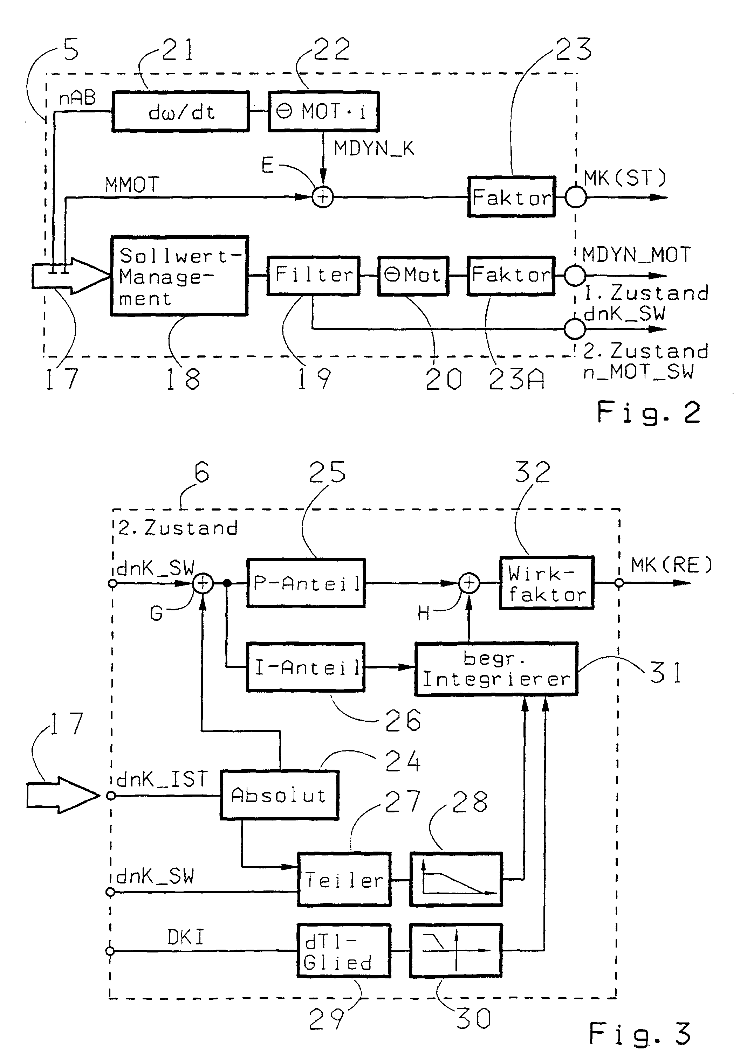

Fig. 1 zeigt eine Übersicht der beiden Regelkreise. Mit Bezugszeichen 3 ist der erste Regelkreis zur Steuerung und Regelung der Kupplung 2 bezeichnet. Mit Bezugszeichen 4 ist der zweite Regelkreis zur Steuerung und Regelung der Lastschaltung eines Automatgetriebes 1 bezeichnet. Unter Lastschaltung im Sinne der Erfindung ist eine Überschneidungsschaltung zu verstehen. Bekanntermaßen öffnet während der Überschneidungsschaltung eine erste Kupplung, während eine zweite Kupplung schließt. In Fig. 1 sind die beiden Kupplungen mit dem Bezugszeichen 33 dargestellt. Ein derartiges Verfahren ist aus der DE 44 24 456 A1 bekannt. Unter Kupplung 2 im Sinne der Erfindung ist eine Anfahrkupplung zu verstehen. Diese kann dem Automatgetriebe 1 vorgeschaltet sein oder der Wandlerüberbrückungskupplung oder einer im Getriebe integrierten Kupplung entsprechen.
Sowohl dem ersten als auch dem zweiten Regelkreis 3, 4 werden Eingangsgrößen 17 zugeführt. Eingangsgrößen 17 sind: das Signal der Leistungsvorgabe durch einen Fahrer, z. B. Drosselklappeninformation DKI bzw. deren Gradient, das Moment einer nicht dargestellten Brennkraftmaschine, welches das Automatgetriebe 1 antreibt und die Ein-/Ausgangsdrehzahl der Kupplung 2. Der erste Regelkreis 3 besteht aus den Blöcken: Sollwert-Vorgabe 5, Regler 6, Faktor 7, Massenverhältnis 8, Absolutwert 9 und Konstante 10. Die Sollwert-Vorgabe 5 liefert als Ausgangsgrößen den Regler-Sollwert und das gesteuerte Moment MK(ST) der Kupplung 2 sowie das dynamische Motormoment MDYN_MOT. Die innere Struktur der Sollwert-Vorgabe 5 wird in Verbindung mit der Fig. 2 erklärt. Am Regler 6 liegen die Eingangsgrößen 17, der Regler-Sollwert sowie der Istwert an.

Im ersten Zustand entspricht der Regler-Sollwert der Motor-Solldrehzahl n_MOT_SW und der Istwert der Motor-Istdrehzahl n_MOT_IST. Im zweiten Zustand entspricht der Regler-Sollwert die Soll-Differenzdrehzahl an der Kupplung 2 dnK_SW und der Istwert der Ist-Differenzdrehzahl an der Kupplung 2 dnK_IST.

Die innere Struktur des Reglers 6 wird in Verbindung mit der Fig. 3 erklärt. Ausgangsgröße des Reglers 6 ist das geregelte Moment MK(RE) der Kupplung 2. Aus dem geregelten Moment MK(RE) der Kupplung 2 und dem dynamischen Motormoment MDYN_MOT ergibt sich das geregelte Summenmoment MK(RE)', Summationspunkt A. Diese wird am Punkt B mit dem aus der Sollwert-Vorgabe 5 stammenden gesteuerten Moment MK(ST) der Kupplung 2 und dem entkoppelnden Moment der Lastschaltung MLS_ENT summiert. Von dieser Summe wird mittels des Funktionsblocks 9 der Absolutwert gebildet und das Ergebnis mit einer Konstanten gewichtet, Funktionsblock 10. Ausgangsgröße ist ein summierter Druck pSUM. Diesem summierten Druck pSUM wird am Summationspunkt C ein Druck-Offset pAK_OFF überlagert. Das sich hieraus ergebende Druckniveau pAK ist das auf die Kupplung 2 wirkende Druckniveau.

Der zweite Regelkreis 4 besteht aus: Sollwert-Vorgabe 11, Regler 12, Faktor 13, Massenverhältnis 14, Absolutwert 15 und Konstante 16. Der zweite Regelkreis 4 bestimmt den Ablauf der Lastschaltung. Eine Lastschaltung, d. h. eine Schaltung von einer ersten in eine zweite Übersetzungsstufe besteht für eine Zug-Hochschaltung aus folgenden Abschnitten: Schnellfüll-, Füllausgleichs-, Lastübernahme-, Gradienteinstell-, Gleit-, Gradientabbau- und Schließphase. Aus den Eingangsgrößen 17 bestimmt der Funktionsblock Sollwert-Vorgabe 11 den Sollwert LS_SW der Lastschaltung, das gesteuerte Moment MLS(ST) der Lastschaltung und das dynamische Moment M_DYN. Der Sollwert LS_SW wird am Summationspunkt D mit dem Istwert LS_IST der Lastschaltung verglichen. Der Istwert LS_IST bestimmt sich aus Ausgangsgrößen des Automatgetriebes 1. Die sich ergebende Regelabweichung ist die Eingangsgröße des Reglers 12. Der Reglerausgangswert entsprechend dem geregelten Moment MLS(RE) der Lastschaltung wird am Summationspunkt E zu dem dynamischen Moment M_DYN aus der Sollwert-Vorgabe 11 addiert. Hieraus ergibt sich das geregelte Summenmoment MLS(RE)' der Lastschaltung. Dieses wird am Summationspunkt F zu dem gesteuerten Moment MLS(ST) der Lastschaltung und zu dem entkoppelnden Moment der Kupplung MK_ENT addiert. Aus dem Ergebnis wird mittels des Funktionsblocks 15 der Absolutwert gebildet. Das Ergebnis wird sodann mit einer Konstanten im Funktionsblock 16 gewichtet. Diese Ausgangsgröße wird am Summationspunkt G mit einem Offset pLS_OFF beaufschlagt. Ergebnis ist der Druckwert pLS für die zuschaltende Kupplung 33 bei der Überschneidungsschaltung.

Der erste und zweite Regelkreis 3, 4 sind über ein Entkopplungsnetzwerk miteinander verbunden. Das Entkopplungsnetzwerk beinhaltet einen ersten Signalweg, in dem der Funktionsblock 7 und der Funktionsblock 8 angeordnet sind. Die Eingangsgröße des ersten Signalwegs ist das geregelte Summenmoment MK(RE)'. Dieses wird mit einem Faktor, Funktionsblock 7, multipliziert. Dieser Faktor wird aufgrund von Versuchen abgestimmt. Das Ergebnis hieraus wird im Funktionsblock 8 mit dem Massenverhältnis von Motor-Masse zu der Summe aus Motor-Masse und Getriebe-Masse gewichtet. Ausgangsgröße ist sodann das entkoppelnde Moment MK_ENT der Kupplung 2. Der zweite Signalweg des Entkopplungsnetzwerks weist die Funktionsblöcke 13 und 14 auf, deren Eingangsgröße ist das geregelte Summenmoment MLS (RE)' der Lastschaltung. Ausgangsgröße des zweiten Signalwegs ist das entkoppelnde Moment der Lastschaltung MLS_ENT.

In Fig. 2 ist die innere Struktur der Sollwert-Vorgabe 5 dargestellt. Dieser werden die Eingangsgrößen 17 zugeführt. Im Funktionsblock 18, Sollwert-Management, wird aus den Eingangsgrößen Drehzahl der Brennkraftmaschine, Drosselklappeninformation DKI und Moment der Brennkraftmaschine ein Roh-Sollwert der Differenzdrehzahl der Kupplung 2 bestimmt. Dieser Wert wird sodann im Filter 19, üblicherweise als PT1-Glied mit Gradienten-Begrenzung ausgeführt, gefiltert. Eine Ausgangsgröße des Filters 19 ist der Sollwert dnk_SW der Differenzdrehzahl der Kupplung 2. Dieser Sollwert wird am Ausgang der Sollwert-Vorgabe 5 bereitgestellt. Eine weitere Ausgangsgröße des Filters 19 wird im Funktionsblock 20 mit dem Motorträgheitsmoment Theta-MOT und einem Faktor, Bezugszeichen 23A, verknüpft. Ausgangsgröße ist sodann das dynamische Moment der Brennkraftmaschine MDYN_MOT. Aus der Eingangsgröße Abtriebsdrehzahl der Kupplung nAB wird mittels des Funktionsblocks 21 der Winkelgeschwindigkeitsgradient dOmega/dt ermittelt. Das Ergebnis wird im Funktionsblock 22 mit dem Motorträgheitsmoment Theta-MOT und der aktuellen Übersetzung des Automatgetriebes i multipliziert. Ausgangsgröße ist das dynamische Moment MDYN_K an der Kupplung 2 während einer Lastschaltung. Hierbei gilt folgende Beziehung:

in der Gradient-Einstellphase:

$$MDYN\_K = Theta\text{-}MOT \cdot i1 \cdot dOmega/dt$$

bzw. in der Gleitphase:

$$MDYN\_K = Theta\text{-}MOT \cdot i2 \cdot dOmega/dt$$

| | |
|---|---|
| MDYN_K: | dynamisches Moment Kupplung |
| Theta-MOT: | Trägheitsmoment Brennkraftmaschine |
| i1: | erste Übersetzungsstufe |
| i2: | zweite Übersetzungsstufe |
| dOmega/dt: | Gradient Winkelgeschwindigkeit Kupplung |

Am Summationspunkt E wird sodann dieses dynamische Moment der Kupplung 2 mit dem von der Brennkraftmaschine abgegebenen Moment MMOT verknüpft. Das Ergebnis wird am Summationspunkt F zu dem zuvor berechneten dynamischen Moment der Brennkraftmaschine MDYN_MOT addiert. Das Ergebnis wird im Funktionsblock 23 mit einem abstimmbaren Faktor gewichtet, dessen Ausgangsgröße das gesteuerte Moment MK(ST) der Kupplung 2 ist.

In Fig. 3 ist die innere Struktur des Reglers 6 dargestellt. Diesem werden die Eingangsgrößen 17 sowie der Sollwert dnK_SW und der Istwert dnK_IST der Differenzdrehzahl der Kupplung 2 zugeführt. Aus dem Istwert dnK_IST wird im Funktionsblock 24 der Absolutwert gebildet. Dieser Absolutwert ist sodann die Eingangsgröße für den Teiler 27 bzw. den Summationspunkt G. Auf den Teiler 27 ist als zweite Eingangsgröße der Sollwert dnK_SW der Differenzdrehzahl der Kupplung 2 geführt. Der Quotient ist auf den Funktionsblock 28, Kennlinie dynamisches Absenken, geführt. Über diese Kennlinie wird bei sehr kleinen Schlupfwerten, z. B. kleiner 10 Umdrehungen, der Eingangswert des Intergrierers, Bezugszeichen 31, künstlich vergrößert. Hierdurch wird eine zusätzliche rampenförmige Druckreduzierung erzielt. Der Einsatzpunkt ergibt sich aus dem Verhältnis von Ist- zu Sollwert der Drehzahldifferenz der Kupplung 2.

Die Eingangsgröße Drosselklappeninformation DKI ist das Eingangssignal für ein dT1-Glied, Bezugszeichen 29. Das Ausgangssignal dieses Filters ist sodann das Eingangssignal für die Kennlinie "schnell Öffnen", Bezugszeichen 30. Über diese Kennlinie wird in Abhängigkeit der Leistungswunsch des Fahrers bzw. dessen Gradient bei schneller Gasrücknahme der Eingangswert des Integrierers 31 künstlich vergrößert. Hieraus ergibt sich eine zusätzliche rampenförmige Druckreduzierung. Die Druckreduzierung ist über die Kennlinie veränderbar.

Am Summationspunkt G wird der Sollwert dnK_SW mit dem im Funktionsblock 24 gebildeten Absolutwert des Istwertes der Differenzdrehzahl Kupplung 2 summiert. Das Ergebnis wird sodann parallel zum einen über einen Funktionsblock P-Anteil, Bezugszeichen 25, und zum zweiten über einen I-Anteil, Bezugszeichen 26, geführt. Die Ausgangsgröße des P-Anteils, Bezugszeichen 25, wirkt auf den Summationspunkt H. Die Ausgangsgröße des Funktionsblockes 26 wirkt auf den begrenzten Integrierer, Bezugszeichen 31. Der Ausgangswert des begrenzten Integrierers 31 wird am Summationspunkt H mit dem Proportional-Anteil aus dem Funktionsblock 25 verknüpft und auf den Funktionsblock 32, Wirkfaktor, geführt. Über den Wirkfaktor wird bestimmt, in welche Richtung das aktuelle Regelmoment wirken soll. Dies ist zur Bestimmung des entkoppelnden Moments MK_ENT notwendig.

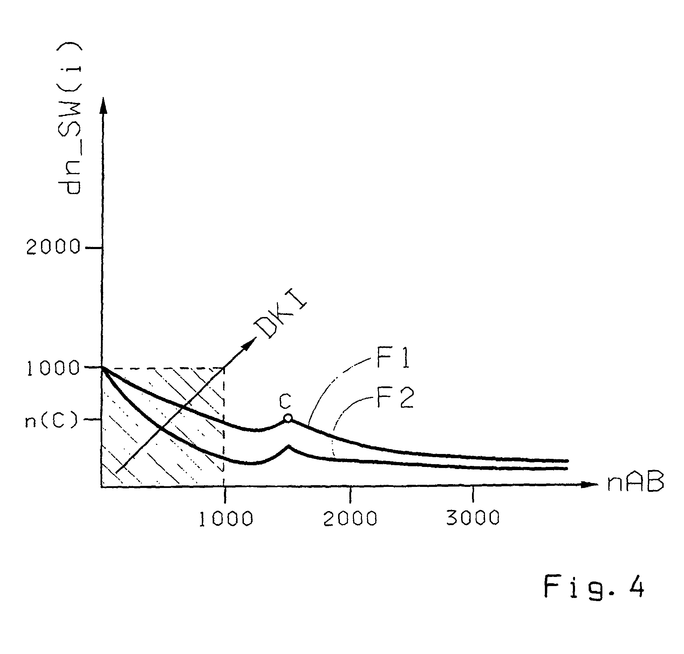

In Fig. 4 ist ein gangabhängiges Kennfeld KF2(i) dargestellt. Über dieses Kennfeld KF2(i) wird die Differenzdrehzahl dn_SW(i) für Nicht-Anfahrgänge, also z. B. der fünfte Gang, des Automatgetriebes bestimmt. Das Kennfeld enthält einen durch die beiden Begrenzungskennlinien F1 und F2 definierten Bereich. Die Begrenzungslinie F2 entspricht 0 % und die Begrenzungslinie F1 entspricht 100 % Drosselklappeninformation DKI. Auf der Begrenzungslinie F1 ist ein Punkt C eingezeichnet. Diese Drehzahlüberhöhung, Wert n(c), bewirkt, daß die Kupplung im schlupfenden Zustand gehalten wird, so daß eine aktive Schwingungsentkopplung erzielt wird. Innerhalb des Kennfelds ist ein schraffiert gezeichneter Bereich dargestellt. Dieser Bereich dient dem Abwürgeschutz, d. h., bei kleinen Abtriebsdrehzahlen nAB der Kupplung 2 wird diese mit einem definierten Sollwert der Differenzdrehzahl beaufschlagt. Der Abwürgeschutz kann auch gemäß folgender Beziehung berechnet werden:

$$dnK\_SW(i) > NMOT\_MIN-nAB$$

NMOT_MIN:    minimalste Drehzahl der Brennkraftmaschine

nAB:           Abtriebsdrehzahl der Kupplung 2

Ein erstes Kennfeld KF(1) mit i = 1 oder 2 wird für einen Anfahrgang, also z. B. den ersten (i = 1), verwendet. Das zweite Kennfeld KF2(i), i = 3 bis n, wird für Nicht-Anfahrgänge, also z. B. den fünften (i = 5), verwendet. Für jeden Gang existiert somit ein eigenes Kennfeld. Der Übergang vom ersten KF(1) auf ein zweites Kennfeld KF(i) erfolgt während der Lastschaltung des Automatgetriebes 2.

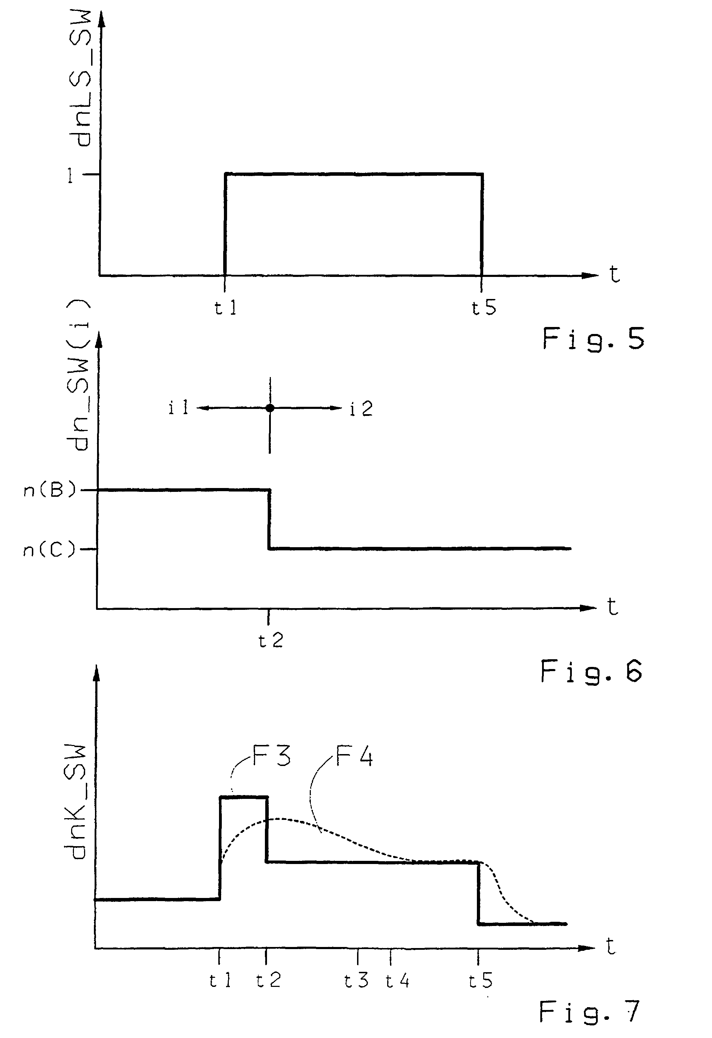

Die Fig. 5 bis 7 zeigen jeweils über der Zeit: Den Sollwert-Offset dnLS_SW, den gangabhängigen Differenzwert dn_SW(i) und den Sollwert der Differenzdrehzahl dnK_SW der Kupplung 2. Die Zeitverläufe sind für den dritten Zustand, d. h. während einer Lastschaltung von einer ersten in eine zweite Übersetzungsstufe des Automatgetriebes, dargestellt. Es wird davon ausgegangen, daß es sich um eine Lastschaltung von einem Anfahrgang in einen Nicht-Anfahrgang handelt. In Fig. 6 sind auf der Ordinate zwei Drehzahlwerte n(B) und n(C) aufgetragen. Diese beiden Drehzahlwerte werden gemäß dem Kennfeld KF(i1) bzw. dem Kennfeld KF(i2) gemäß Fig. 4 bestimmt. Die Umschaltung vom Drehzahlwert n(B) auf den Drehzahlwert n(C) erfolgt bei Änderung des Übersetzungsverhältnisses, in Fig. 6 mit i1 und i2 bezeichnet. In Fig. 7 ist als durchgezogene Linie ein Zeitverlauf F3 ausgeführt. Dieser Verlauf entspricht der Ausgangsgröße des Funktionsblocks 18, Sollwert-Management, aus Fig. 2. Mit Bezugszeichen F4 ist der mittels des Filters 19 aus dem Verlauf F3 gewonnene Sollwert dnK_SW der Differenzdrehzahl der Kupplung 2 dargestellt. Der Verlauf F3 ergibt sich aus der Addition der Verläufe gemäß Fig. 5 und 6 zu jedem Zeitpunkt. Zum Zeitpunkt t1 wird der Sollwert-Offset dnLS_SW sprungförmig erhöht. Die gangabhängige Differenzdrehzahl dn_SW(i) zum Zeitpunkt t1 hat den Wert gemäß n(B). Hieraus ergibt sich zum Zeitpunkt t1 die sprungförmige Erhöhung des Sollwertes zur Differenzdrehzahl dnK_SW der Kupplung 2. Zum Zeitpunkt t2 wird vom Kennfeld KF(i1) auf ein Kennfeld KF(i2) umgeschaltet, hieraus ergibt sich ein neuer Drehzahlwert n(C). Der Zeitpunkt t2 ist gleichbedeutend mit dem Ende der Gradient-Einstellphase und Beginn der Gleitphase. Die Gleitphase endet zum Zeitpunkt t3. Während des Zeitraums t3 bis t4 erfolgt die Gradient-Abbauphase. Im Zeitraum t4 bis t5 erfolgt die Schließphase der zuschaltenden Kupplung 33. Zum Zeitpunkt t5 wird gemäß Fig. 5 der Sollwert-Offset auf Null reduziert. Hieraus ergibt sich gemäß Fig. 7 ebenfalls eine Reduktion des Sollwertes der Differenzdrehzahl dnK_SW der Kupplung 2. Im ersten und zweiten Zustand, d. h. im Anfahrvorgang bzw. dem Fahren oberhalb einer Fahrzeuggrenzgeschwindigkeit entspricht der Sollwert der Differenzdrehzahl dnK_SW der Kupplung 2 dem gangabhängigen Differenzdrehzahlwert dn_SW(i).

Der Ablauf des erfindungsgemäßen Verfahrens ist folgendermaßen:

1. Zustand: Das Anfahren erfolgt über einen Motordrehzahlregler. Das Fahrzeug setzt sich in Bewegung bis nach dem Unterschreiten der Differenzdrehzahlschwelle an der Kupplung 2 bzw. nach dem Überschreiten der Grundgeschwindigkeit der Übergang in den zweiten Zustand erfolgt.

2. Zustand: Jetzt wird die Differenzdrehzahl an der Kupplung geregelt. Der Sollwert wird dem dem Gang entsprechenden Kennfeld entnommen. Um einen sanften Übergang zu bekommen, wird dem dem Sollwertgenerator nachgeschalteten Filter als Anfangswert die aktuelle Ist-Differenzdrehzahl dnK_IST eingeprägt. So wird eine stetige Änderung des Ist-Differenzdrehzahlverlaufs und damit ein stetiger Kupplungsmomentverlauf erzielt.

Wird nun eine Lastschaltung initiiert, so wird vom Kennfeld KF(i1) auf ein Kennfeld KF(i2) gemäß Fig. 4 gewechselt. Hieraus resultiert dann ein Ablauf gemäß den Fig. 5 bis 7. Während der Lastschaltung wird über das Entkopplungsnetzwerk via zweitem Signalweg dem gesteuerten MK(ST) und geregelten Summenmoment MK(RE)' ein Entkopplungsmoment MLS_ENT der Lastschaltung addiert. Via dem ersten Signalweg wird der zuschaltenden Kupplung ein Entkopplungsmoment MK_ENT der Kupplung 2 addiert.

Bezugszeichen

1 Automatgetriebe
2 Kupplung
3 erster Regelkreis
4 zweiter Regelkreis
5 Sollwert-Vorgabe
6 Regler
7 Faktor
8 Berechnungsblock Massenverhältnis
9 Absolutwert
10 Konstante
11 Sollwert-Vorgabe
12 Regler

13 Faktor
14 Berechnungsblock: Massenverhältnis
15 Absolutwert
16 Konstante
17 Eingangsgrößen
18 Sollwert-Management
19 Filter
20 Trägkeitsmoment
21 Berechnungsblock dOmega/dt
22 Berechnungsblock
23, 23A Faktor
24 Absolutwert
25 P-Anteil
26 I-Anteil
27 Teiler
28 Kennlinie dynamisches Absenken
29 dT1-Glied
30 Kennlinie "schnell Öffnen"
31 begrenzter Intergrierer
32 Wirkfaktor
33 zuschaltende Kupplung bei Lastsschaltung

dn_SW(i) gangabhängige Differenzdrehzahl
dnK_SW Sollwert Differenzdrehzahl Kupplung
dnK_IST Istwert Differenzdrehzahl Kupplung
MK(ST) gesteuertes Moment Kupplung
MK(RE) geregeltes Moment Kupplung
MK_ENT entkoppelndes Moment Kupplung
MK(RE) geregeltes Summenmoment Kupplung
pAK_OFF Druckoffset Anfahrkupplng
pSUM summmierter Druck
pAK Druckniveau Kupplung
MDYN_K dynamisches Moment Kupplung
pLS_OFF Druckoffset Lastschaltung
nEIN Eingangsdrehzahl Kupplung
nAB Abtriebsdrehzahl Kupplung
n_MOT_IST Istwert Motordrehzahl
n_MOT_SW Solldrehzahl
n_MOT_MIN minimalste Drehzahl Brennkraftmaschine
LS_SW Sollwert Lastschaltung
LS_IST Istwert Lastschaltung
MLS(ST) gesteuertes Moment Lastschaltung
MLS(RE) geregeltes Moment Lastschaltung
MLS(RE)' geregeltes Summenmoment Lastschaltung
MLS_ENT entkoppelndes Moment Lastschaltung
MMOT Motormoment
MDYN_MOT dynamisches Motormoment
DKI Drosselklappeninformation = Laststellung
dnLS_SW Sollwert-Offset
i1, i2 Übersetzungsstufe
KF(i) Kennfeld
v Fahrzeuggeschwindigkeit
GW Grenzwert Fahrzeuggeschwindigkeit

**Patentansprüche**

1. Verfahren zum Steuern und Regeln einer Kupplung in einem gestuften lastschaltbaren Automatgetriebe für ein Kraftfahrzeug, bei dem ein elektronisches Steuergerät mittels eines ersten bzw. eines zweiten Regelkreises das Verhalten der Kupplung bestimmt, wobei zwei Fahrzustände vorgesehen sind und der erste Zustand einem Anfahrvorgang unterhalb einer Fahrzeuggrenzgeschwindigkeit im Zugbetrieb, der zweite Zustand dem Fahren oberhalb einer Fahrzeuggrenzgeschwindigkeit entspricht und daß eine Lastschaltung von einer ersten (i1) in eine zweite Übersetzungsstufe (i2) durchführbar ist, wobei zur Steuerung und Regelung der Kupplung während des ersten Fahrzustands der erste Regelkreis verwendet wird und dessen Regelgröße dem Istwert der Motordrehzahl ($n\_MOT\_IST$) äquivalent ist und daß während des zweiten Fahrzustands ein zweiter Regelkreis verwendet wird, dessen Regelgröße dem Istwert einer Differenzdrehzahl ($dnK\_IST$) der Kupplung äquivalent ist, **dadurch gekennzeichnet, daß** während eines dritten Fahrzustands, welcher dem Fahren unterhalb einer Fahrzeuggrenzgeschwindigkeit im Schubbetrieb entspricht, die Kupplung mit einem gesteuerten von verschiedenen Einflußgrößen abhängigen Druckwert beaufschlagt wird und daß der Istwert der Differenzdrehzahl ($dnK\_IST$) der Kupplung nicht bis zu einem wert Null nachgeführt ist.

2. Verfahren nach Anspruch 1, **dadurch gekennzeichnet, daß** die Lastschaltung maßgeblich von einem dritten Regelkreis bestimmt wird und der erste und dritte bzw. der zweite und dritte Regelkreis über ein Entkopplungsnetzwerk miteinander verbunden sind, wobei das Entkopplungsnetzwerk jeweils einen ersten und einen zweiten Signalwert aufweist.

3. Verfahren nach Anspruch 2, **dadurch gekennzeichnet, daß** bei einer Lastschaltung von einer ersten (i1) in eine zweite Übersetzungsstufe (i2) des Automatgetriebes während des ersten Fahrzustandes der erste Regelkreis mittels des Entkopplungsnetzwerkes via erstem Signalweg auf den dritten Regelkreis einwirkt und der dritte Regelkreis mittels des Entkopplungsnetzwerkes via zweitem Signalweg auf den ersten Regelkreis einwirkt.

4. Verfahren nach Anspruch 2, **dadurch gekennzeichnet, daß** bei einer Lastschaltung von einer ersten (i1) in eine zweite Übersetzungsstufe (i2) des Automatgetriebes während des zweiten Fahrzustandes der zweite Regelkreis mittels des Entkopplungsnetzwerkes via erstem Signalweg auf den dritten Regelkreis einwirkt und der dritte Regelkreis mittels des Entkopplungsnetzwerkes via zweitem Signalweg auf den zweiten Regelkreis einwirkt.

5. Verfahren nach Anspruch 1, **dadurch gekennzeichnet, daß** das Druckniveau ($pAK$) der Kupplung sich im ersten und zweiten Zustand aus einem Offsetwert ($pAK\_OFF$) und einem Summenwert ($pSUM$) ergibt ($pAK = pAK\_OFF + pSUM$), wobei der Summenwert ($pSUM$) maßgeblich aus der Bilanz von gesteuertem Moment ($MK(ST)$) der Kupplung, geregeltem Summenmoment ($MK(RE)'$) der Kupplung und entkoppelndem Lastschaltmoment ($MLS\_ENT$) bestimmt wird ($pSUM = f(MK(ST), MK(RE)', MLS\_ENT)$).

6. Verfahren nach Anspruch 5, **dadurch gekennzeichnet, daß** das gesteuerte Moment ($MK(ST)$) sich maßgeblich aus dem dynamischen Moment der Kupplung ($MDYN\_K$) und dem Motormoment ($MMOT$) bestimmt wird ($MK(ST) = f(MDYN\_K, MMOT)$).

7. Verfahren nach Anspruch 5, **dadurch gekennzeichnet, daß** das geregelte Summenmoment ($MK(RE)'$) der Kupplung aus dem dynamischen Motormoment ($MDYN\_MOT$) und einem geregelten Moment ($MK(RE)$) der Kupplung bestimmt wird.

8. Verfahren nach Anspruch 7, **dadurch gekennzeichnet, daß** das geregelte Moment ($MK(RE)$) im ersten Fahrzustand maßgeblich aus dem Soll-/Ist-Vergleich einer der Motordrehzahl äquivalenten Größe und einer Leistungsvorgabe ($DKI$) eines Fahrers mittels eines Reglers bestimmt wird.

9. Verfahren nach einem der vorangehenden Ansprüche, **dadurch gekennzeichnet, daß** die gangabhängige Solldrehzahl ($n\_MOT\_SW(i)$) für einen Anfahrgang des Automatgetriebes über Kennfelder ($KF(i)$), bestimmt wird, wobei diese eine Zuordnung von Leistungsvorgabe des Fahrers ($DKI$) und Abtriebsdrehzahl ($nAB$) der Kupplung darstellen.

10. Verfahren nach Anspruch 9, **dadurch gekennzeichnet, daß** die Umschaltung von dem ersten Kennfeld ($KF1(i1)$) auf ein zweites Kennfeld ($KF1(i2)$) während der Lastschaltung am Ende der Gradienteinstellphase erfolgt.

11. Verfahren nach Anspruch 7, **dadurch gekennzeichnet, daß** das geregelte Moment im zweiten Fahrzustand ($MK(RE)$) maßgeblich aus dem Soll-/Ist-Vergleich der Drehzahldifferenz ($dnK\_SW, dnK\_IST$) der Kupplung und einer Leistungsvorgabe ($DKI$) eines Fahrers mittels eines Reglers bestimmt wird.

12. Verfahren nach Anspruch 11, **dadurch gekennzeichnet, daß** der Regler einen begrenzten Integrator beinhaltet, wobei dem Integrator als Eingangsgrößen die Regelabweichung aus dem Soll-/Ist-Vergleich der Drehzahldifferenz (dnK_SW, dnK_IST) der Kupplung , die Verstellgeschwindigkeit der Leistungsvorgabe (DKI) und dem Verhältnis Ist- zu Sollwert der Differenzdrehzahl (dnK_IST/dnK_SW) der Kupplung zugeführt wird.

13. Verfahren nach Anspruch 11, **dadurch gekennzeichnet, daß** sich der Sollwert der Differenzdrehzahl (dnK_SW) der Kupplung aus der Addition eines Sollwert-Offset (dnLS_SW) und einer gangabhängigen Differenzdrehzahl (dn_SW(i)) der Kupplung ergibt.

14. Verfahren nach Anspruch 13, **dadurch gekennzeichnet, daß** bei einem Übergang von dem ersten oder dritten Fahrzustand in den zweiten Fahrzustand der Sollwert der Differenzdrehzahl (dnK_SW) über ein dynamisches Verzögerungsglied geleitet wird, wobei als dessen Anfangswert der aktuelle Istwert der Differenzdrehzahl (dnK_IST) gesetzt wird.

15. Verfahren nach Anspruch 13, **dadurch gekennzeichnet, daß** im zweiten Zustand der Sollwert-Offset der Differenzdrehzahl (dnLS_SW) der Kupplung während der Lastschaltung von einer ersten (i1) in eine zweite Übersetzungsstufe (i2) des Automatgetriebes in der Lastübernahme- oder Gradienteinstellphase erhöht und mit Beendigung der Schließphase wieder reduziert wird.

16. Verfahren nach Anspruch 13, **dadurch gekennzeichnet, daß** die Umschaltung von einem Kennfeld (KF(i1)) auf ein zweites Kennfeld (KF(i2)) während der Lastschaltung am Ende der Gradienteinstellphase erfolgt.

17. Verfahren nach einem der vorangehenden Ansprüche, **dadurch gekennzeichnet, daß** bei einer Fahrzeuggeschwindigkeit (v) kleiner einem Grenzwert (GW) eine erhöhte Differenzdrehzahl (dn_SW(i)) der Kupplung als Abwürgeschutz über das jeweilige Kennfeld (KF(i)) eingestellt wird.

18. Verfahren nach einem der vorangehenden Ansprüche, **dadurch gekennzeichnet, daß** im zweiten Zustand bei einer Fahrzeuggeschwindigkeit (v) kleiner einem Grenzwert (GW) eine erhöhte Differenzdrehzahl (dn_SW(i)) der Kupplung als Abwürgeschutz berechnet wird, wobei die Differenzdrehzahl (dn_SW(i)) größer eingestellt ist als die Differenz aus der minimalsten Drehzahl der Brennkraftmaschine (n_MOT_MIN) und der Abtriebsdrehzahl der Kupplung (nAB).

19. Verfahren nach Anspruch 1, **dadurch gekennzeichnet, daß** das Druckniveau (pAK) der Kupplung sich im dritten Zustand aus einem von einer oder mehreren der folgenden Größen abhängigen Druckwert ergibt: Drosselklappe, Bremsbetätigung, Bremsdruck, Motormoment, Lastschaltung, und daß das Druckniveau (pAK) eine gesteuerte Größe ist.

20. Vorrichtung zur Durchführung eines Verfahrens zum Steuern und Regeln einer Kupplung in einem gestuften lastschaltbaren Automatgetriebe für ein Kraftfahrzeug, insbesondere eines Verfahrens nach einem der vorgenannten Ansprüche, mit einem elektronischen Steuergerät mit einem ersten und einem zweiten Regelkreis und einem dritten Regelkreis, der über ein Entkopplungsnetzwerk mit dem ersten und zweiten Regelkreis verbunden ist, wobei die Regelgröße des ersten Regelkreises dem Istwert der Motordrehzahl (n_MOT_IST) und die Regelgröße des zweiten Regelkreises dem Istwert einer Differenzdrehzahl (dnK_IST) der Kupplung äquivalent ist und der Istwert der Differenzdrehzahl (dnK_IST) der Kupplung nicht bis zu einem Wert Null nachgeführt ist.

21. Vorrichtung nach Anspruch 20, **dadurch gekennzeichnet, daß** das Entkopplungsnetzwerk einen ersten und einen zweiten Signalweg zwischen dem ersten und dritten sowie dem zweiten und dritten Regelkreis vorsieht.

**Claims**

1. Method for controlling and regulating a clutch in a stepped, power-shifting automatic transmission for a motor vehicle, with an electronic control unit determining clutch behavior by means of a first or a second control loop, with two driving conditions being provided, with the first condition corresponding to a driveaway process in traction condition at a speed below a vehicle limit speed and the second condition corresponding to a driving condition at a speed exceeding a vehicle limit speed, and with a power shift from a first (i1) to a second gear ratio (i2) being possible, with the first control loop, whose control variable is equivalent to the actual value of the engine speed (n_MOT_IST), being used for controlling and regulating the clutch during the first driving condition and the second control loop, whose control variable is equivalent to the actual value of a speed differential (dnK_IST) of the clutch, being used during the second driving condition, **characterized in that** during a third driving condition, which corresponds to a driving condition at a speed below a vehicle limit speed in overrun condition, the clutch is pressurized by a controlled pressure value dependent on various influencing variables and that the actual value of the speed differential (dnK_IST) of the clutch is not tracked to a zero value.

2. Method according to claim 1, **characterized in that** the power shift is decisively determined by a third control loop, with the first and third or second and third control loops being linked to each other via a decoupling network, with the decoupling network featuring a first and a second signal value.

3. Method according to claim 2, **characterized in that** during a power shift from a first (i1) to a second gear ratio (i2) of the automatic transmission in the first driving condition, the first control loop by means of the decoupling network acts via the first signal path on the third control loop, and the third control loop by means of the decoupling network acts via the second signal path on the first control loop.

4. Method according to claim 2, **characterized in that** during a power shift from a first (i1) to a second gear ratio (i2) of the automatic transmission in the second driving condition, the second control loop by means of the decoupling network acts via the first signal path on the third control loop, and the third control loop by means of the decoupling network acts via the second signal path on the second control loop.

5. Method according to claim 1, **characterized in that** the pressure level (pAK) of the clutch in the first and second condition results from an offset value (pAK_OFF) and a cumulative value (pSUM) (pAK = pAK_OFF + pSUM), with the cumulative value (pSUM) being largely determined by the balance of controlled moment (MK(ST)) of the clutch, controlled cumulative moment (MK (RE)') of the clutch and decoupled power-shifting moment (MLS_ENT) (pSUM = f(MK(ST), MK(RE)', MLS_ENT)).

6. Method according to claim 5, **characterized in that** the controlled moment (MK(ST)) is largely determined by the dynamic moment of the clutch (MDYN_K) and the engine moment (MMOT) (MK (ST) = f(MDYN_K, MMOT).

7. Method according to claim 5, **characterized in that** the controlled cumulative moment (MK(RE)') of the clutch is determined by the dynamic engine moment (MDYN_MOT) and a controlled moment (MK(RE)) of the clutch.

8. Method according to claim 7, **characterized in that** the controlled moment (MK(RE) in the first driving condition is largely determined by the variance comparison of a value equivalent to the engine speed and a performance specification (DKI) of a driver by means of a controller.

9. Method according to one of the preceding claims, **characterized in that** the speed-dependent desired speed (n_MOT_SW(i)) for a starting gear of the automatic transmission is determined via maps (KF(i)) representing an assignment of the driver's performance specification (DKI) and the output speed (nAB) of the clutch.

10. Method according to claim 9, **characterized in that** the switchover from the first map (KF1(i1)) to a second map (KF1(i2)) takes place during the power shift at the end of the gradient-setting phase.

11. Method according to claim 7, **characterized in that** the controlled moment in the second driving condition (MK(RE)) is largely determined by the variance comparison of the speed differential (dnK_SW, dnK_IST) of the clutch and the driver's performance specification (DKI) by means of a controller.

12. Method according to claim 11, **characterized in that** the controller comprises a limited integrator, with the integrator receiving as input variables: the system deviation from the variance comparison of the speed differential (dnK_SW, dnK_IST) of the clutch, the adjusting speed of the performance specification (DKI) and the relationship between actual and desired value of the speed differential (dnK_IST/dnK_SW) of the clutch.

13. Method according to claim 11, **characterized in that** the desired value of the speed differential (dnK_SW) of the clutch results from the addition of a desired-value offset (dnLS_SW) and a speed-dependent speed differential (dn_SW (i)) of the clutch.

14. Method according to claim 13, **characterized in that** during a changeover from the first or third driving condition to the second driving condition, the desired value of the speed differential (dnK_SW) is conducted via a dynamic time element, with the current actual value of the speed differential (dnK_IST) being set as its initial value.

15. Method according to claim 13, **characterized in that** in the second condition, the desired-value offset of the speed differential (dnLS_SW) of the clutch during the power shift from a first (i1) to a second gear ratio (i2) of the automatic transmission is raised in the load-transfer or gradient-setting phase and reduced again at the end of the closing period.

16. Method according to claim 13, **characterized in that** the switchover from one map (KF(i1)) to a second map (KF(i2)) takes place during the power shift at the end of the gradient-setting phase.

17. Method according to one of the preceding claims, **characterized in that** at a vehicle speed (v) below a limit value (GW), an elevated speed differential (dn_SW(i)) of the clutch is set via the respective map (KF(i)) as stalling protection.

18. Method according to one of the preceding claims, **characterized in that** in the second condition at a vehicle speed (v) below a limit value (GW), an elevated speed differential (dn_SW(i)) of the clutch is computed as stalling protection, with the speed differential (dn_SW(i)) being set at a higher level than the difference between the minimum speed of the internal combustion engine (n_MOT_MIN) and the output speed of the clutch (nAB).

19. Method according to claim 1, **characterized in that** the pressure level (pAK) of the clutch in the third condition results from a pressure value depending on one or several of the following parameters: throttle valve, brake control, brake pressure, engine torque, power shift; and that the pressure level (pAK) is a controlled variable.

20. Unit used for a method for controlling and regulating a clutch in a stepped, power-shifting automatic transmission for a motor vehicle, especially for a method according to one of the preceding claims, with an electronic control unit with a first and a second control loop, and with a third control loop linked to the first and second control loops via a decoupling network, with the controlled variable of the first control loop being equivalent to the actual value of the engine speed (n_MOT_IST) and the controlled variable of the second control loop being equivalent to the actual value of a speed differential (dnK_IST) of the clutch, and with the actual value of the speed differential (dnK_IST) of the clutch not being tracked to a zero value.

21. Unit according to claim 20, **characterized in that** the decoupling network is provided with a first and a second signal path between the first and the second and between the second and the third control loop.

**Revendications**

1. Méthode de commande et de réglage d'un embrayage d'une boîte de vitesses automatique couplable sous charge pour un véhicule automobile, dont un boîtier de commande électronique détermine, respectivement à l'aide d'un premier et d'un deuxième circuits de réglage, le comportement de l'embrayage, sachant que sont prévus deux états de roulage ; le premier état de conduite correspondant à un procédé de démarrage du véhicule en dessous d'une vitesse seuil en tirage et le deuxième état de conduite correspondant au roulage au-dessus d'une vitesse seuil du véhicule, et sachant qu'il est possible d'effectuer un passage de vitesse sous charge - d'un premier (i1) rapport de démultiplication vers un deuxième (i2) rapport de démultiplication - sachant que pour la commande et le réglage de l'embrayage pendant le premier état de conduite est utilisé le premier circuit de réglage, dont la grandeur réglée est équivalente à la valeur réelle de la vitesse de rotation du moteur (n_MOT_IST) et sachant que pendant le deuxième état de conduite est utilisé un deuxième circuit de réglage, dont la grandeur réglée est équivalente à la valeur réelle d'une vitesse de rotation différentielle (dnK_IST) de l'embrayage, **caractérisée en ce que** pendant un troisième état de conduite, correspondant au roulage du véhicule en dessous d'une vitesse seuil en poussée, l'embrayage est pressurisé à une valeur de pression pilotée et dépendante de plusieurs grandeurs d'influence et **en ce que** la valeur réelle du régime différentiel (dnK_IST) de l'embrayage n'est pas régulée.

2. Méthode selon la revendication 1, **caractérisée en ce que** le couplage sous charge est déterminé essentiellement par un troisième circuit de réglage et **en ce que** respectivement le premier et le troisième circuits de réglage et le deuxième et le troisième circuits de réglage sont liés par l'intermédiaire d'un réseau de découplage, sachant que le réseau de découplage comporte respectivement une première et une deuxième valeurs de signal.

3. Méthode selon la revendication 2, **caractérisée en ce que** lors d'un couplage sous charge d'un premier rapport de démultiplication (i1) vers un deuxième rapport de démultiplication (i2) de la boîte de vitesses automatique, le premier circuit de réglage agit - pendant le premier état de roulage - par l'intermédiaire du réseau de découplage et via la première voie de signal sur le troisième circuit de réglage ; et **en ce que** le troisième circuit de réglage agit par l'intermédiaire du réseau de découplage et via la deuxième voie de signal sur le premier circuit de réglage.

4. Méthode selon la revendication 2, **caractérisée en ce que** lors d'un couplage sous charge d'un premier rapport de démultiplication (i1) vers un deuxième rapport de démultiplication (i2) de la boîte de vitesses automatique, le deuxième circuit de réglage agit - pendant le deuxième état de roulage - par l'intermédiaire du réseau de découplage et via la première voie de signal sur le troisième circuit de réglage ; et **en ce que** le troisième circuit de réglage agit par l'intermédiaire du réseau de découplage et via la deuxième voie de signal sur le deuxième circuit de réglage.

**5.** Méthode selon la revendication 1, **caractérisée en ce que** le niveau de pression (pAK) de l'embrayage résulte - dans un premier et un deuxième états - d'une valeur offset (pAK_OFF) et d'une valeur cumulée (pSUM), d'où (pAK = pAK_OFF + pSUM), sachant que la valeur cumulée (pSUM) est déterminée essentiellement à partir du bilan du couple piloté (MK(ST)) de l'embrayage, du couple cumulé (MK (RE)') de l'embrayage et du couple de couplage sous charge découplant (MLS_ENT), d'où (pSUM = f (MK(ST), MK (RE)', MLS_ENT)).

**6.** Méthode selon la revendication 5, **caractérisée en ce que** le couple piloté (MK (ST)) est déterminé essentiellement à partir du couple dynamique de l'embrayage (MDYN_K) et du couple moteur (NMOT), d'où (MK (ST) = f (MDYN_K, NMOT).

**7.** Méthode selon la revendication 5, **caractérisée en ce que** le couple cumulé piloté (MK (RE)') de l'embrayage est déterminé à partir du couple moteur dynamique (MDYN_NMOT) et d'un couple piloté (MK (RE) ) de l'embrayage.

**8.** Méthode selon la revendication 7, **caractérisée en ce que** le couple piloté (MK (RE) ) au premier état de roulage est déterminé essentiellement à partir de la comparaison de la variation d'une grandeur équivalente au régime moteur et à la puissance de consigne (DKI) réglée au moyen d'un régulateur par le conducteur.

**9.** Méthode selon une des revendications précédentes, **caractérisée en ce que**, pour un rapport de démarrage de la boîte de vitesses automatique, le régime théorique dépendant du rapport engagé (n_MOT_SW (i) ) est déterminé par des champs caractéristiques (KF (i)), sachant que ceux-ci représentent une affectation de la puissance de consigne du conducteur (DKI) et du régime de sortie (nAB) de l'embrayage.

**10.** Méthode selon la revendication 9, **caractérisée en ce que** la commutation à partir du premier champ caractéristique (KF1 (i1) ) vers un deuxième champ caractéristique (KF1 (i2) ) s'effectue pendant le couplage sous charge et vers la fin de la phase de réglage du gradient.

**11.** Méthode selon la revendication 9, **caractérisée en ce que** le couple réglé au deuxième état de roulage (MK (RE) ) est déterminé essentiellement à partir de la comparaison de la variation de la différence de régime (dnK_SW, dnK_IST) de l'embrayage et la puissance de consigne (DKI) réglée par le conducteur au moyen d'un régulateur.

**12.** Méthode selon la revendication 11, **caractérisée en ce que** le régulateur contient un intégrateur limité, sachant que les grandeurs d'entrée avec lesquelles l'intégrateur est alimenté résultent de l'écart de régulation issu de la comparaison de la variation de la différence de régime (dnK_SW, dnK_IST) de l'embrayage, la vitesse de réglage de la puissance de consigne (DKI) et le rapport entre la valeur réelle et la valeur théorique du régime différentiel (dnK_SW, dnK_IST).

**13.** Méthode selon la revendication 11, **caractérisée en ce que** la valeur théorique du régime différentiel (dnK_SW) de l'embrayage résulte de l'addition d'un offset de la valeur théorique (dnLS_SW) et d'un régime différentiel (dn_SW (i) ) de l'embrayage.

**14.** Méthode selon la revendication 13, **caractérisé en ce que** lors du passage du premier ou du troisième états de roulage au deuxième état de roulage la valeur théorique du régime différentiel (dnK_SW) est conduite à travers un opérateur à retard dynamique, sachant que la valeur réelle actuelle du régime différentiel (dnK_IST) est mise comme valeur initiale du régime différentiel.

**15.** Méthode selon la revendication 13, **caractérisé** en e que, au deuxième état, pendant le couplage sous charge d'un premier rapport de démultiplication (i1) vers un deuxième rapport de démultiplication (i2) de la boîte de vitesses automatique, l'offset de la valeur théorique du régime différentiel (dnLS_SW) de l'embrayage est augmenté dans la phase de reprise de charge ou de réglage du gradient et en ce que l'offset est réduit dès que la phase de fermeture est terminée.

**16.** Méthode selon la revendication 13, **caractérisée en ce que** la commutation d'un champ caractéristique (KF (i1) ) vers un deuxième champ caractéristique (KF (i2) ) pendant le couplage sous charge s'effectue à la fin de la phase de réglage du gradient.

**17.** Méthode selon une des revendications précédentes, **caractérisée en ce que** lors d'une vitesse véhicule (v) inférieure à un seuil (GW) est réglé, par l'intermédiaire du champ caractéristique correspondant (KF (i) ), un régime différentiel élevé (dn_SW (i) ) de l'embrayage en tant que protection anti-calage moteur.

**18.** Méthode selon une des revendications précédentes, **caractérisée en ce que**, au deuxième état, à une vitesse véhicule (v) inférieure à un seuil (GW) est calculé un régime différentiel élevé (dn_SW (i) ) de l'embrayage en tant que protection anti-calage du moteur, sachant que le régime différentiel réglé (dn_SW (i) ) est plus élevé que la différence issue du régime le plus petit du moteur à combustion interne (n_MOT_MIN) et le régime de sortie de l'embrayage (nAB).

19. Méthode selon la revendication 1, **caractérisée en ce que** le niveau de pression (pAK) de l'embrayage résulte, au troisième état, à partir d'une valeur de pression dépendante d'un ou de plusieurs des grandeurs suivantes : clapet de régulation, actionnement du frein, pression de freinage, couple du moteur, couplage sous charge, et **en ce que** le niveau de pression (pAK) est une grandeur régulée.

20. Dispositif permettant de mettre en place une méthode pour la commande et le réglage d'un embrayage dans une boîte de vitesses automatique couplable sous charge pour un véhicule automobile, et en particulier pour la mise en place d'une méthode selon une des revendications précédentes, équipé d'un un boîtier de commande électronique doté d'un premier et d'un deuxième circuits de réglage et d'un troisième circuit de réglage, ce dernier étant connecté par l'intermédiaire d'un réseau de découplage, avec le premier et le deuxième circuits de réglage, sachant que la valeur réglée du premier circuit de réglage est équivalente à la valeur réelle du régime moteur (n_MOT_IST) et sachant que la valeur réglée du deuxième circuit de réglage est équivalente à la valeur réelle d'un régime différentiel (dnK_IST) de l'embrayage et sachant que la valeur réelle du régime différentiel (dnK_IST) de l'embrayage n'est pas régulée.

21. Dispositif selon la revendication 20, **caractérisée en ce que** dans le réseau de découplage est prévu une première et une deuxième voies de signal entre le premier et le troisième ainsi que entre le deuxième et le troisième circuits de réglage.

Fig. 1

nAB

| dω/dt | ⊖ MOT·i |

MDYN_K

MMOT

E

⊕

| Faktor | → MK(ST)

| Sollwert-Management | | Filter | ⊖Mot | Faktor |

MDYN_MOT

1. Zustand
dnK_SW

2. Zustand
n_MOT_SW

## Fig. 2

2.Zustand

dnK_SW

⊕
G

| P-Anteil |

H ⊕

| Wirk-faktor | → MK(RE)

| I-Anteil | → | begr. Integrierer |

dnK_IST

| Absolut |

dnK_SW

| Teiler |

DKI

| dT1-Glied |

## Fig. 3

Fig. 4

Fig. 5

Fig. 6

Fig. 7